# EUROPÄISCHE PATENTANMELDUNG

(11) **EP 2 248 713 A1**
(43) Veröffentlichungstag der Anmeldung: **10.11.2010**
(21) Anmeldenummer: 09006240.7
(22) Anmeldetag: 07.05.2009
(51) Int. Cl.: B62H 3/04, B25H 1/00, B60R 9/10

(54) **Haltevorrichtung**

(71) Anmelder: Weghofer, Harald, 1200 Wien (AT)
(72) Erfinder: Weghofer, Harald, 1200 Wien (AT)
(74) Vertreter: Schmitz, Hans-Werner

(57) **Zusammenfassung**

Die vorliegende Erfindung betrifft eine Haltevorrichtung mit einer ersten Aufnahmevorrichtung (2), die zwei Seitenteile (2a, 2b) aufweist, die beabstandet aneinander angeordnet sind, mit einer zweiten Aufnahmevorrichtung (3), die zwei Seitenteile (3a, 3b) aufweist, die beabstandet zueinander angeordnet sind, gekennzeichnet durch ein Verbindungselement (4), an dem die erste Aufnahmevorrichtung (2) und die zweite Aufnahmevorrichtung (3) angeordnet sind, wobei die erste Aufnahmevorrichtung (2) und die zweite Aufnahmevorrichtung (3) am Verbindungselement (4) mittels einer lös- und fixierbaren Verstelleinrichtung (4a) relativ zueinander verstellbar angeordnet sind.

## Beschreibung

### Beschreibung

Die Erfindung betrifft eine Haltevorrichtung zur Aufnahme von Gegenständen, insbesondere von Fahrrädern, die sowohl stationär aufgestellt, als auch an mobilen Transportsystemen befestigt verwendet werden kann.

Fahrradständer bzw. Fahrrad-Aufnahmevorrichtungen sind aus dem Stand der Technik in unterschiedlichen Ausgestaltungen bekannt. Hierbei handelt es sich im Wesentlichen entweder um im Boden und/oder einer Wand verankerte stationäre Vorrichtungen, in die nur ein Vorderrad eines Fahrrads gestellt und fixiert wird (DE 103 61 937 A1), oder um Wand-Befestigungssysteme (DE 20 2008 010 223 U1), in die ein Vorderrad und/oder ein Hinterrad eines Fahrrads eingehängt werden, die starr an einer Wand befestigt sind Diese Fahrrad-Aufnahmevorrichtungen weisen den Nachteil auf, dass sie entweder keine ausreichende Fixierung des Fahrrads ermöglichen oder nach der Montage nicht individuell auf verschiedene Abmessungen des Rahmens und die Breite der Laufräder des Fahrrads eingestellt werden können. Darüber hinaus sind auch mobile freistehende Ständersysteme bekannt, bei denen das Fahrrad lediglich auf einem Rohr am Sattel aufgehängt wird. Die Stabilität und Standfestigkeit dieser Systeme ist für den Einsatz im privaten, insbesondere aber im gewerblichen und sportlichen Bereich nicht ausreichend, da das Fahrrad bei einer äußeren Kraft- oder Stoßeinwirkung leicht herunterfallen oder der ganze Fahrradständer samt Fahrrad umkippen kann.

Es ist Aufgabe der vorliegenden Erfindung, eine Haltevorrichtung bereitzustellen, die die oben genannten Nachteile vermeidet und die individuell einstellbar und somit vielseitig einsetzbar ist.

Die Lösung dieser Aufgabe erfolgt durch die Merkmale des Anspruchs 1.

Die erfindungsgemäße Haltevorrichtung weist den Vorteil auf, dass sie freistehend und transportabel einsetzbar ist und zwei an einem Verbindungselement angeordnete und mittels einer lös- und fixierbaren Verstelleinrichtung relativ zueinander verstellbare Aufnahmevorrichtungen aufweist, die eine individuelle Anpassung an die Größe eines aufzunehmenden Gegenstands, insbesondere eines Fahrrads, ermöglichen.

Die Unteransprüche haben vorteilhafte Weiterbildungen der Erfindung zum Inhalt.

Darüber hinaus weisen die beiden Aufnahmevorrichtungen vorzugsweise je zwei Seitenteile auf, deren Abstand zur Anpassung an verschiedene Reifenbreiten des Fahrrads relativ zueinander verstellbar ist. Dadurch, dass eine der beiden Aufnahmevorrichtungen schwenkbar am Verbindungselement befestigt ist, wird durch einfaches Aufschwenken der Aufnahmevorrichtung eine schnelle und beschädigungsfreie Entnahme des Fahrrads aus der Haltevorrichtung bei gleichzeitig kompakter, sicherer und stabiler Verwahrung ermöglicht.

Weitere Einzelheiten, Merkmale und Vorteile der Erfindung ergeben sich aus nachfolgender Beschreibung von Ausführungsbeispielen anhand der Zeichnung.

Es zeigt:
- Fig. 1: eine schematisch vereinfachte Seitenansicht einer Ausführungsform der erfindungsgemäßen Haltevorrichtung,
- Fig. 2: eine schematisch vereinfachte Draufsicht einer ersten Aufnahmevorrichtung , und
- Fig. 3: eine der Fig. 2 entsprechende Darstellung einer zweiten Aufnahmevorrichtung
- Fig. 4: eine der Fig. 1 entsprechende Darstellung der Haltevorrichtung im geöffneten Zustand, und
- Fig. 5: eine der Fig. 1 entsprechende Darstellung der Haltevorrichtung im geschlossenen Zustand.

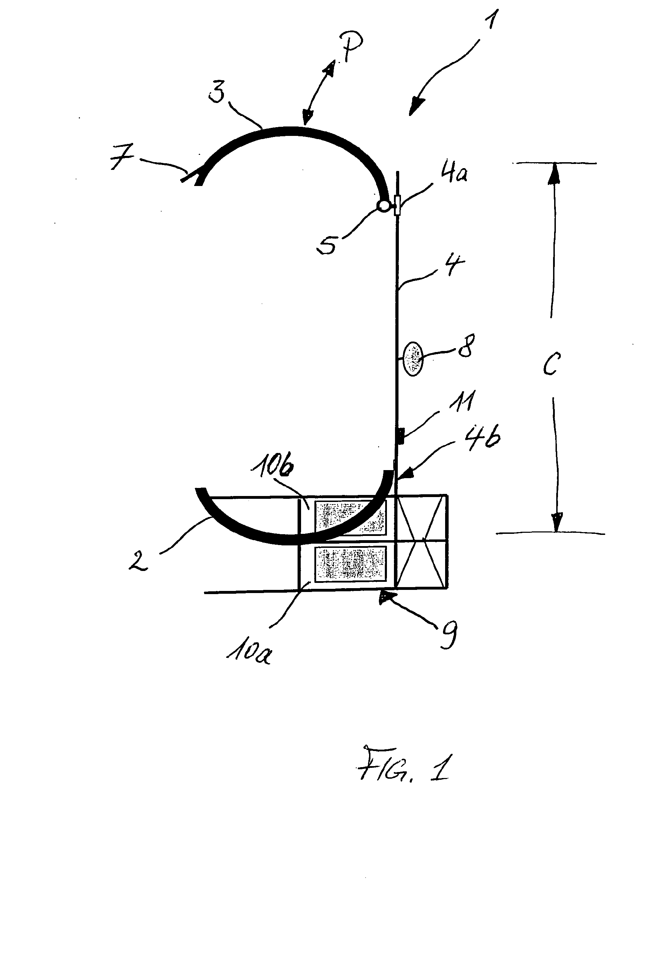

Nachfolgend wird mit Bezug auf Fig. 1 eine Ausführungsform der erfindungsgemäßen Haltevorrichtung 1 detailliert beschrieben.

Wie in Fig. 1 dargestellt, umfasst die Haltevorrichtung 1 eine erste Aufnahmevorrichtung 2 und eine zweite Aufnahmevorrichtung 3, die an einem Verbindungselement 4 angeordnet sind, das die erste Aufnahmevorrichtung 2 und die zweite Aufnahmevorrichtung 3 miteinander verbindet. Hierbei ist die erste Aufnahmevorrichtung 2 am Verbindungselement 4 starr befestigt, während die zweite Aufnahmevorrichtung 3 mittels einer lös- und fixierbaren Verstelleinrichtung 4a relativ zur ersten Aufnahmevorrichtung 2 verstellbar am Verbindungselement 4 befestigt ist. Ferner ist an der Verstelleinrichtung 4a ein Gelenk 5 vorgesehen, das ein Schwenken der zweiten Aufnahmevorrichtung 3 in Richtung eines Pfeils P ermöglicht. Wie aus Fig. 1 zudem ersichtlich, ist an der zweiten Aufnahmevorrichtung 3 ein Handgriff 7 vorgesehen, der das Schwenken der zweiten Aufnahmevorrichtung 3 in Richtung des Pfeils P erleichtert. Ein Abstand C zwischen der ersten Aufnahmevorrichtung 2 und der zweiten Aufnahmevorrichtung 3 kann durch Lösen und entsprechendes Fixieren der Verstelleinrichtung 4a eingestellt werden.

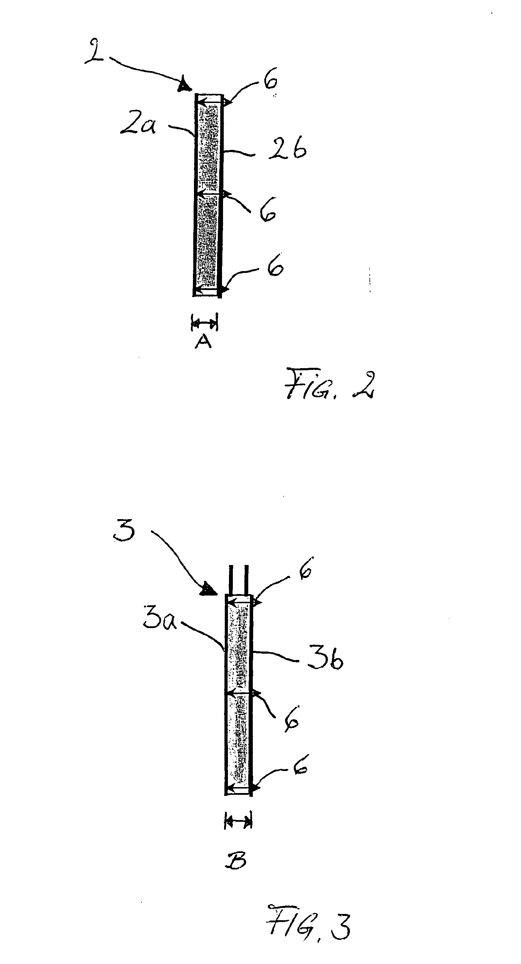

Wie in Fig. 2 und 3 dargestellt, umfasst die erste Aufnahmevorrichtung 2 zwei Seitenteile 2a und 2b und die zweite Aufnahmevorrichtung 3 zwei Seitenteile 3a und 3b. Ein Abstand A zwischen den Seitenteilen 2a und 2b der ersten Aufnahmevorrichtung 2 und ein Abstand B zwischen den Seitenteilen 3a und 3b der zweiten Aufnahmevorrichtung 3 können jeweils durch eine Mehrzahl von Befestigungselemente 6 eingestellt werden, von denen in dieser Abbildung jeweils drei Befestigungselemente 6 dargestellt sind.

Am in Fig. 1 dargestellten Verbindungselement 4 ist ferner ein Ablagefach 8 angeordnet, in dem, insbesondere bei der Aufnahme eines Fahrrads, diverse Kleinteile, wie z. B. Ersatzteile, Handschuhe oder eine Pulsuhr, abgelegt werden können. Darüber hinaus ist am Verbindungselement 4 ein Elektroanschluss 11 vorgesehen, der eine Stromzufuhr ermöglicht, um z. B. eine optional mögliche Beleuchtung der Haltevorrichtung 1 zu versorgen oder eine Akkuaufladung von elektrischen Fahrrädern zu ermöglichen. Eine hierfür erforderliche Verkabelung ist im Innern des Verbindungselements vorgesehen und daher in der Abbildung von Fig. 1 hier nicht sichtbar.

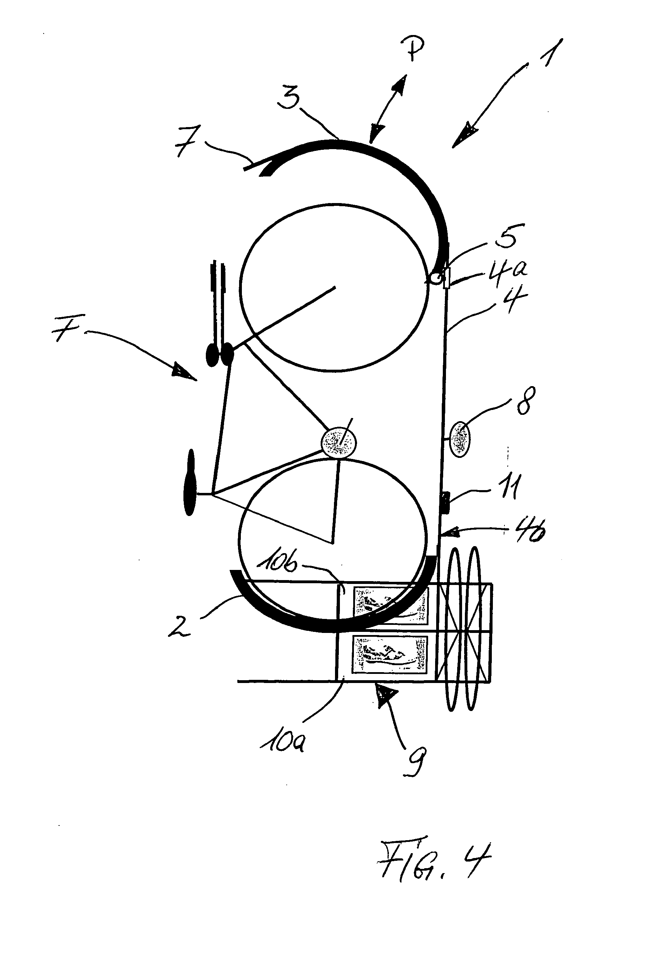

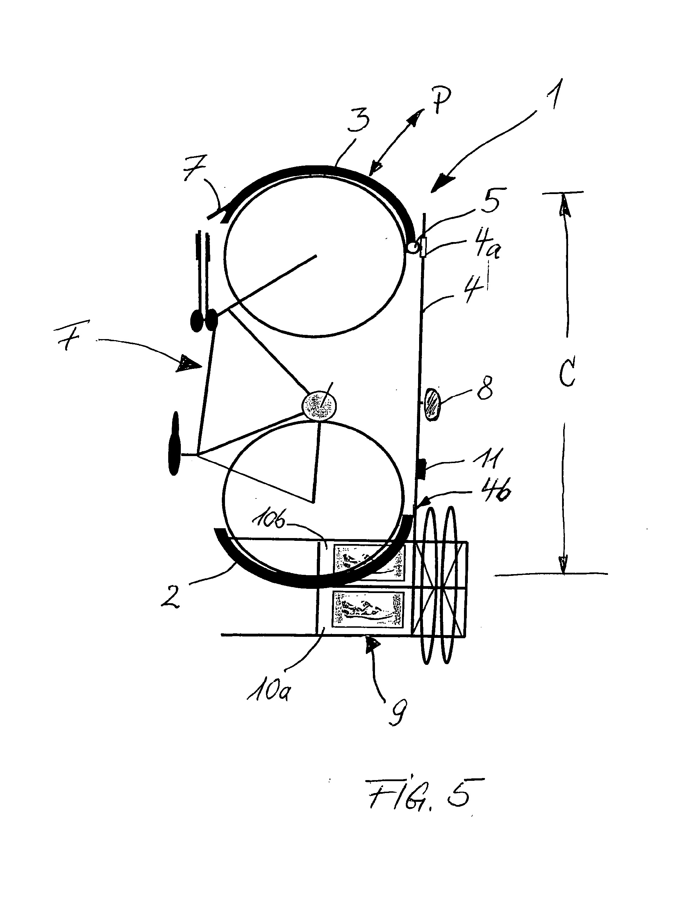

Ein unterer Endbereich 4b des Verbindungselements 4 ist an einem Ständerelement 9 befestigt, das eines oder eine Mehrzahl von Aufbewahrungsfächern aufweist, von denen zwei in dieser Darstellung beispielhaft mit den Bezugszeichen 10a und 10b gekennzeichnet sind. In diesen Aufbewahrungsfächern 10a und 10b können z. B. Fahrradschuhe, ein Helm und andere Ausrüstungsgegenstände untergebracht werden. Ferner ist darin auch die Unterbringung von Laufrädern möglich, wie dies in Fig. 4 und Fig. 5 beispielhaft dargestellt ist. Am Ständerelement 9 und/oder am Verbindungselement 4 ist eine Befestigungsvorrichtung zur Befestigung der Haltevorrichtung an einer Wand und/oder einer mobilen Trägervorrichtung vorgesehen, die in Fig. 1, Fig. 4 und Fig. 5 jedoch nicht dargestellt ist.

Fig. 4 zeigt die erfindungsgemäße Haltevorrichtung 1 im geöffneten Zustand. Wie aus Fig. 4 ersichtlich, kann ein Fahrrad F bei geöffneter bzw. in Richtung des Pfeils P nach oben geschwenkter zweiter Aufnahmevorrichtung 3 einfach mit dem Hinterrad in die erste Aufnahmevorrichtung 2 gestellt werden. Hierbei sorgt das Eigengewicht des Fahrrads sowie die auf die Reifenbreite des Hinterrads angepasste Breite A zwischen den Seitenteilen 2a und 2b der ersten Aufnahmevorrichtung 2 bereits bei geöffneter zweiter Aufnahmevorrichtung 3 für einen ausreichend sichereren Halt, ohne dass irgendwelche zusätzlichen Befestigungs- oder Fixierungselemente, wie z. B. Haken, Gurte und Ösen wie bei herkömmlichen Fahrradständern dafür erforderlich sind. Im geschlossenen Zustand der Haltevorrichtung 1, wie sie in Fig. 5 dargestellt ist, wird das Fahrrad F sicher und stabil von den beiden auf den Abstand C (entsprechend der Länge des Fahrrads F) eingestellten Aufnahmevorrichtungen 2 und 3 sowie deren auf den Abstand A bzw. B (entsprechend der Reifenbreite des Vorder- bzw. Hinterrads des Fahrrads F) eingestellten Seitenteile 2a, 2b bzw. 3a, 3b gehalten. Die zwei Seitenteile 2a, 2b der ersten Aufnahmevorrichtung 2 und die zwei Seitenteile 3a, 3b der zweiten Aufnahmevorrichtung 3 sind vorzugsweise auf ihren Innenobenflächen mit einer z. B. gummiartigen Beschichtung versehen, die ein Verkratzen eines damit in Berührung kommenden Laufrads des Fahrrads F verhindert.

Bei der oben beschriebenen Ausführungsform der erfindungsgemäßen Haltevorrichtung 1 bilden das Verbindungselement 4 samt der Verstelleinrichtung 4a, dem Gelenk 4b und den ersten und zweiten Aufnahmevorrichtungen 2 und 3 sowie das Ständerelement 9 ein eigenständig standfähiges Gestell, das nicht an starren Vorrichtungen, wie z. B. einer Wand, befestigt werden muss.

Zum Beispiel für den Einsatz bei Sportwettkämpfen, insbesondere in der Wechselzone bei Triathlon- und Duathlonwettbewerben, ermöglicht die erfindungsgemäße Haltevorrichtung 1 eine sichere und standfeste Bereitstellung der Fahrräder und eine schnelle und wettbewerbstaugliche Entnahme dieser Sportgeräte. Darüber hinaus kann die Haltevorrichtung 1 optional auch an einer mobilen Trägervorrichtung für den Fahrradtransport vorzugsweise auf dem Dach von Kraftfahrzeugen befestigt werden. Außerdem ist der Einsatz der erfindungsgemäßen Haltevorrichtung für die Aufbewahrung von Fahrrädern im Wohnbereich von Häusern und Wohnungen prädestiniert, bei denen die kompakte Bauweise und die leichte Montage und Demontage der Haltevorrichtung 1, insbesondere mittels Steck- und Schraubverbindungen sowie Schnellverschlüssen, von Vorteil ist.

Neben der vorstehenden schriftlichen Offenbarung der Erfindung wird hiermit ergänzend explizit auf deren zeichnerische Darstellung in den Figuren 1 bis 5 verwiesen.

### Bezugszeichenliste

- 1: Haltevorrichtung
- 2: erste Aufnahmevorrichtung
- 2a, 2b: Seitenteile der ersten Aufnahmevorrichtung
- 3: zweite Aufnahmevorrichtung
- 3a, 3b: Seitenteile der zweiten Aufnahmevorrichtung
- 4: Verbindungselement
- 4a: Verstelleinrichtung
- 4b: unterer Endbereich des Verbindungselements
- 5: Gelenk
- 6: Befestigungselement
- 7: Handgriff
- 8: Ablagefach
- 9: Ständerelement
- 10a, 10b: Aufbewahrungsfach
- 11: Elektroanschluss
- A: Abstand der Seitenteile der ersten Aufnahmevorrichtung
- B: Abstand der Seitenteile der zweiten Aufnahmevorrichtung
- C: Abstand zwischen erster und zweiter Aufnahmevorrichtung
- F: Fahrrad
- P: Pfeil

## Patentansprüche

1. Haltevorrichtung (1)
- mit einer ersten Aufnahmevorrichtung (2), die zwei Seitenteile (2a, 2b) aufweist, die beabstandet aneinander angeordnet sind,
- mit einer zweiten Aufnahmevorrichtung (3), die zwei Seitenteile ( 3a, 3b) aufweist, die beabstandet zueinander angeordnet sind, **gekennzeichnet durch** ein Verbindungselement (4), an dem die erste Aufnahmevorrichtung (2) und die zweite Aufnahmevorrichtung (3) angeordnet sind,
- wobei die erste Aufnahmevorrichtung (2) und die zweite Aufnahmevorrichtung (3) am Verbindungselement (4) mittels einer lös- und fixierbaren Verstelleinrichtung (4a) relativ zueinander verstellbar angeordnet sind.

2. Haltevorrichtung nach Anspruch 1, **dadurch gekennzeichnet, dass** die zweite Aufnahmevorrichtung (3) mittels eines Gelenks (5) an der Verstelleinrichtung (4a) schwenkbar am Verbindungselement (4) angeordnet ist.

3. Haltevorrichtung nach Anspruch 1 oder 2, **dadurch gekennzeichnet, dass** ein Abstand (A) der Seitenteile (2a, 2b) der ersten Aufnahmevorrichtung (2) zueinander und ein Abstand (B) der Seitenteile (3a, 3b) der zweiten Aufnahmevorrichtung (3) zueinander mittels eines oder einer Mehrzahl von Befestigungselementen (6) einstellbar ist.

4. Haltevorrichtung nach Anspruch 3, **dadurch gekennzeichnet, dass** die Befestigungselemente (6) fixierbare Bolzen sind.

5. Haltevorrichtung nach Anspruch 1 oder 2, **dadurch gekennzeichnet, dass** die zweite Aufnahmevorrichtung (3) einen Handgriff (7) zum Einstellen eines Abstands (C) zwischen der ersten Aufnahmevorrichtung (2) und der zweiten Aufnahmevorrichtung (3) sowie zum Schwenken der zweiten Aufnahmevorrichtung (3) aufweist.

6. Haltevorrichtung nach einem der Ansprüche 1 bis 5, **dadurch gekennzeichnet, dass** ein Ablagefach (8) am Verbindungselement (4) angeordnet ist.

7. Haltevorrichtung nach einem der Ansprüche 1 bis 6, **dadurch gekennzeichnet, dass** ein unterer Endbereich (4b) des Verbindungselements (4) an einem Ständerelement (9) befestigt ist, das eines oder eine Mehrzahl von Aufbewahrungsfächern (10a, 10b) aufweist.

8. Haltevorrichtung nach einem der Ansprüche 1 bis 7 **dadurch gekennzeichnet, dass** am Ständerelement (9) und/oder am Verbindungselement (4) eine Befestigungsvorrichtung zur Befestigung an einer Wand und/oder einer mobilen Trägervorrichtung vorgesehen ist.

9. Haltevorrichtung nach einem der Ansprüche 1 bis 8, **dadurch gekennzeichnet, dass** am Verbindungselement (4) ein Elektroanschluss (11) für eine Stromzufuhr vorgesehen ist.

10. Haltevorrichtung nach einem der Ansprüche 1 bis 9, **dadurch gekennzeichnet, dass** die erste Aufnahmevorrichtung (2) und die zweite Aufnahmevorrichtung (3) aus Metall und/oder Glas und/oder Kunststoff und/oder Verbundstoffen und/oder Keramik und/oder Stein hergestellt ist.

11. Haltevorrichtung nach einem der Ansprüche 1 bis 10, **dadurch gekennzeichnet, dass** die zwei Seitenteile (2a, 2b) der ersten Aufnahmevorrichtung (2) und die zwei Seitenteile der zweiten Aufnahmevorrichtung (3) auf ihren Innenobenflächen zum Schutz des eingestellten Gegenstands mit einer Beschichtung versehen sind.

12. Haltevorrichtung nach einem der Ansprüche 1 bis 10, **dadurch gekennzeichnet, dass** die erste Aufnahmevorrichtung (2), die zweite Aufnahmevorrichtung (3), das Verbindungselement (4), die Verstelleinrichtung (4a), das Ständerelement (9) und das Ablagefach (8) mittels Steck- und/oder Schraubverbindungen und/oder einer sonstigen Verbindungsart montierbar und demontierbar sind.
